# EUROPEAN PATENT APPLICATION

(11) **EP 4 083 685 A1**
(43) Date of publication of application: **02.11.2022**
(21) Application number: 20907193.5
(22) Date of filing: 14.12.2020
(51) Int. Cl.: G02B 30/00, G03B 35/18, G09F 9/00, G09F 9/40, H04N 13/122, H04N 13/366

(54) **INFORMATION PROCESSING DEVICE, INFORMATION PROCESSING SYSTEM, AND MEMBER**

(30) Priority: 27.12.2019 JP 2019238550
(71) Applicant: Sony Group Corporation, Tokyo 108-0075 (JP)
(72) Inventor: TOYOSHIMA, Kenichiro, Tokyo 141-8610 (JP); NAKAKI, Kenichi, Tokyo 141-8610 (JP); HIRAMATSU, Takeshi, Tokyo 141-8610 (JP); OHTA, Yoshiyuki, Tokyo 141-8610 (JP); YOKOYAMA, Kazuki, Tokyo 108-0075 (JP); TORIUMI, Takuya, Fujisawa-shi, Kanagawa 251-0042 (JP)
(74) Representative: 2SPL Patentanwälte PartG mbB
(86) International application number: PCT/JP2020/046459
(87) International publication number: WO 2021/131829

(57) **Abstract**

The present technology relates to an information processing device, an information processing system, and a member capable of reducing a sense of incongruity given to a user observing a stereoscopic image.

An information processing device according to the present technology includes: a first display unit that displays a stereoscopic image; and a member that is along at least one of a horizontal or vertical plane in real space, the plane containing an edge of a display surface of the first display unit. The present technology can be applied to, for example, a stereoscopic image display device that displays a stereoscopic image.

## Description

### TECHNICAL FIELD

The present technology relates to an information processing device, an information processing system, and a member, and more particularly, to an information processing device, an information processing system, and a member capable of reducing a sense of incongruity given to a user observing a stereoscopic image.

### BACKGROUND ART

In recent years, a stereoscopic image display device capable of stereoscopically displaying content has become widespread. The stereoscopic image display device can provide binocular parallax to a user by displaying a right-eye image and a left-eye image horizontally shifted on a display, and can display a virtual object at an arbitrary distance in the depth direction.

For example, Patent Document 1 describes a technology for controlling the display of a display unit so that a stereoscopic image is displayed on a virtual display surface that is placed in a space.

### CITATION LIST

### PATENT DOCUMENT

Patent Document 1: WO 2019/044188 A

### SUMMARY OF THE INVENTION

### PROBLEMS TO BE SOLVED BY THE INVENTION

Meanwhile, in the case of representing virtual depth using a stereoscopic image display device having a planar display surface, the surface position of the stereoscopic image display device, which is an actual display position, is different from the virtual surface position of a virtual object.

Thus, although the focal position of the eyes is at the surface position of the stereoscopic image display device, the user perceives that the virtual object virtually placed at a position different from the surface position of the stereoscopic image display device is in focus.

Therefore, there is a possibility that the difference between the sense of the position of the virtual object virtually placed and the sense of distance based on the user's life experience gives a sense of incongruity or fatigue to the user observing the stereoscopic image.

The present technology has been made in view of such a situation, and allows a reduction in a sense of incongruity given to a user observing a stereoscopic image.

### SOLUTIONS TO PROBLEMS

An information processing device according to one aspect of the present technology includes: a first display unit that displays a stereoscopic image; and a member that is along at least one of a horizontal or vertical plane in real space, the plane containing an edge of a display surface of the first display unit.

An information processing system according to one aspect of the present technology includes an information processing device, a shielding member, an extension member, and a side wall member. The information processing device includes a display unit that displays a stereoscopic image. The shielding member is installed along a first horizontal plane in real space, the plane containing an upper end of the display surface. The extension member is installed along a second horizontal plane in the real space, the second horizontal plane containing a lower end of the display surface. The side wall member is installed along a vertical plane in the real space, the vertical plane containing a left or right end of the display surface of the display unit.

A member according to one aspect of the present technology is installed along at least one of a horizontal or vertical plane in real space, the plane containing an edge of a display surface of a display unit that displays a stereoscopic image.

In the information processing device according to one aspect of the present technology, a stereoscopic image is displayed, and the line-of-sight of a user is attracted by the member that is along at least one of the horizontal or vertical plane in the real space, the plane containing the edge of the display surface.

In the information processing system according to one aspect of the present technology, a stereoscopic image is displayed, the shielding member is installed along the first horizontal plane in the real space, the first horizontal plane containing the upper end of the display surface, the extension member is installed along the second horizontal plane in the real space, the second horizontal plane containing the lower end of the display surface, and the side wall member is installed along the vertical plane in the real space, the vertical plane containing the left or right end of the display surface.

In the member according to one aspect of the present technology, the line-of-sight of a user is attracted by the member that is installed along at least one of the horizontal or vertical plane in the real space, the plane containing the edge of the display surface that displays a stereoscopic image.

### BRIEF DESCRIPTION OF DRAWINGS

Fig. 1 schematically illustrates the state of stereoscopic display.
Fig. 2 is a side view illustrating an example of focus adjustment for a user observing a stereoscopic image.
Fig. 3 is a perspective view illustrating a first configuration example of the external appearance of a display device according to an embodiment of the present technology.
Fig. 4 is a perspective view illustrating a second configuration of the external appearance of the display device.
Fig. 5 is an enlarged cross-sectional view of a main part illustrating the vicinity of a shielding member.
Fig. 6 illustrates a configuration example of an information processing system.
Fig. 7 is a block diagram illustrating a functional configuration example of the information processing system in Fig. 6.
Fig. 8 is a perspective view illustrating a second configuration of the external appearance of the display device.
Fig. 9 is an enlarged cross-sectional view of a main part illustrating the vicinity of the upper side of a mask part.
Fig. 10 is a perspective view illustrating a fourth configuration of the external appearance of the display device.
Fig. 11 illustrates another configuration example of the information processing system.
Fig. 12 is a block diagram illustrating a functional configuration example of the information processing system in Fig. 11.
Fig. 13 is another perspective view illustrating the fourth configuration of the external appearance of the display device.
Fig. 14 is a perspective view illustrating a fifth configuration of the external appearance of the display device.
Fig. 15 is another perspective view illustrating a fourth configuration of the external appearance of the display device.
Fig. 16 illustrates still another configuration example of the information processing system.
Fig. 17 is a block diagram illustrating a functional configuration example of the information processing system in Fig. 16.
Fig. 18 is a perspective view illustrating a sixth configuration of the external appearance of the display device.
Fig. 19 is another perspective view illustrating the first configuration of the external appearance of the display device.
Fig. 20 is a perspective view illustrating a seventh configuration of the external appearance of the display device.
Fig. 21 is a cross-sectional view illustrating the seventh configuration of the external appearance of the display device.
Fig. 22 illustrates an example of a shielding member.
Fig. 23 illustrates an example of the shape of the shielding member.
Fig. 24 illustrates an example of the shape of the shielding member.

### MODE FOR CARRYING OUT THE INVENTION

Hereinafter, modes for carrying out the present technology will be described. The description will be given in the following order.
1. Overview
2. Example of Shielding Member
3. Example of Extension Member
4. Modification

### 1. Overview

In recent years, stereoscopic display of a virtual object has been implemented by displaying a stereoscopic image that includes a left-eye image and a right-eye image. A user can perceive depth through binocular parallax that is the difference between the left-eye image and the right-eye image.

Various technologies have been developed to deliver different images (left-eye image and right-eye image) to the user's left eye and right eye. For example, there are a method of viewing a display by wearing dedicated glasses, a method of wearing a dedicated device (head mounted display (HMD)) in which displays are arranged in front of the left and right eyes, a method (for example, a parallax barrier method or a lenticular method) of delivering different images to the left and right eyes without wearing glasses or a device, and the like.

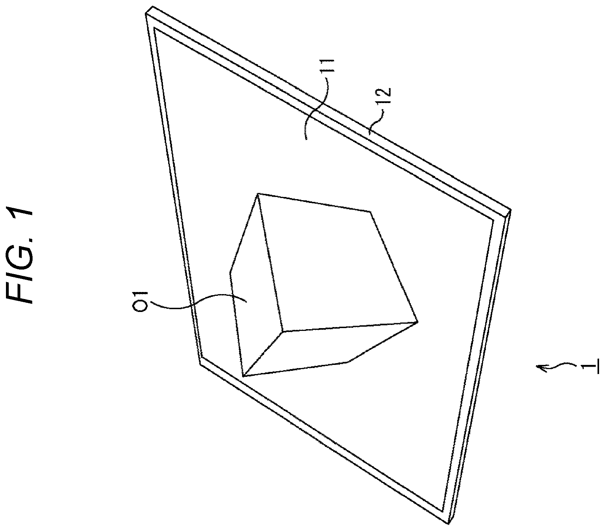

Fig. 1 schematically illustrates the state of stereoscopic display.

As illustrated in Fig. 1, a horizontally long rectangular display unit 11 including a liquid crystal display (LCD), an organic electro luminescence (EL) display, or the like is provided at the front of a display 1. A narrow frame 12 is provided around the flat display unit 11.

The display 1 is installed, for example, such that the display unit 11 faces obliquely upward with respect to a horizontal plane in real space.

The display 1 is a display device capable of displaying a stereoscopic image on the display unit 11. In Fig. 1, an object O1 having a substantially cubic shape is displayed so as to appear to partially pop out from the display 1.

The display 1 can represent virtual depth by displaying a stereoscopic image and give the user a feeling as if the object O1 were present in real space.

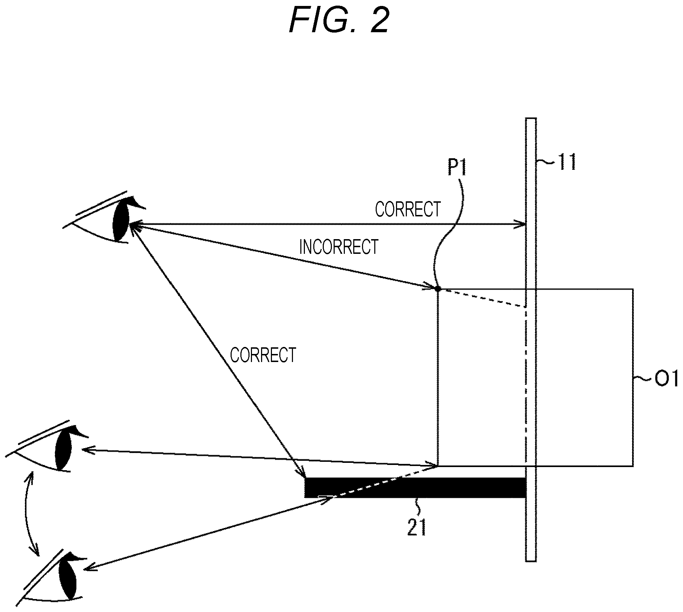

Fig. 2 is a side view illustrating an example of focus adjustment for a user observing a stereoscopic image. For convenience of description, in Fig. 2, the display unit 11 is disposed so as to be perpendicular to the horizontal plane in the real space.

In a case where a stereoscopic image in which the object O1 is virtually placed so as to appear to partially pop out from the display unit 11 is displayed on the display unit 11, the image display position on the display unit 11 where the object O1 is actually displayed is different from the virtual surface position of the object O1. The image display position of the object O1 is a position on the display surface of the display unit 11, indicated by the one-dot chain line in Fig. 2.

Thus, although the focal position of the eyes is the position indicated by the one-dot chain line, for example, the user perceives as if the focus were on the vertex P1 of the object O1 placed at a position different from the display surface of the display unit 11.

Since the user needs to focus the eyes at a distance between the user and the display unit 11 for a long time, there is a possibility that the difference between the sense of the position of the virtually placed object O1 and the sense of distance based on the user's experience causes a sense of incongruity. The influence of such sense of incongruity on the user focus adjustment may cause the user to lose the stereoscopic effect to be obtained by the user, or to feel fatigue.

In the present technology, as illustrated with color in Fig. 2, a shield 21 is provided in the vicinity of the display unit 11 so as to be horizontal to the horizontal plane in the real space. In a case where the user views the display unit 11 from a certain viewpoint, the shield 21 is installed in such a manner as to shield a part of the object O1. Furthermore, the shield 21 has an effective shape and color so as not to disturb the user's observation of the stereoscopic image.

The shield 21 has a structure (visual attraction structure) that attracts the line-of-sight of the user. The difference between the distance from the user's point of view to a part of the shield 21 and the distance from the point of view to the display surface induces the user focus adjustment. Furthermore, a sense of front and rear is presented to the user by the partial shielding of the display surface by the shield 21. Moreover, the shield 21 can also activate congestion awareness of the user. These make it possible to reduce a sense of incongruity caused by the user observing the stereoscopic image.

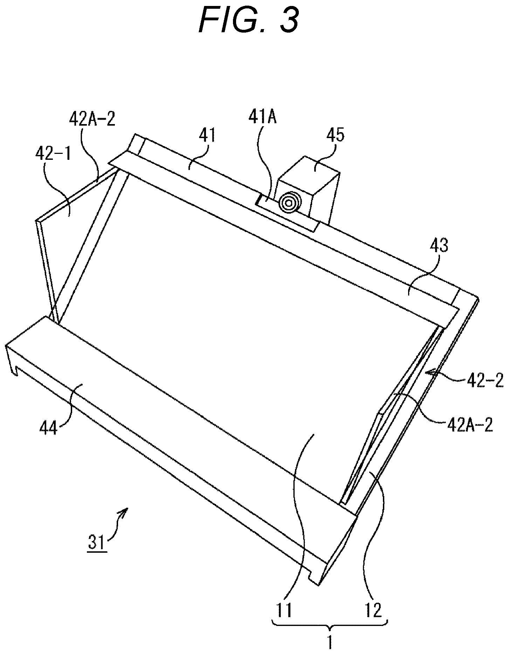

Fig. 3 is a perspective view illustrating a first configuration example of the external appearance of a display device 31 according to an embodiment of the present technology.

As illustrated in Fig. 3, the display device 31 is provided with the display 1 described with reference to Fig. 1.

A transparent protective panel 41 is provided to the front surface of the display 1 as a cover member. Part of the center upper edge of the protective panel 41 is formed with a cut-away part 41A so as not to come into contact with a camera 45.

Side wall members 42-1 and 42-2, which are triangular plate-shaped transparent members, are provided at the left and right edges of the frame 12 provided around the display unit 11. The side wall members 42-1 and 42-2 are each provided such that one side is in contact with the display 1.

The side wall members 42-1 and 42-2 are installed so as to be perpendicular to the horizontal plane in the real space, the plane containing the left end and the right end, respectively, of the display unit 11. Furthermore, the side wall members 42-1 and 42-2 are installed such that upper surfaces 42A-1 and 42A-2 are horizontal to the horizontal plane in the real space.

A shielding member 43, which is an opaque member having a narrow band shape, is provided in an eaves shape on the upper edge of the frame 12. The shielding member 43 is installed such that the lower surface of the short side is in contact with part of the upper surface 42A-1, 42A-2, and the long side is in contact with the protective panel 41.

An extension member 44 which is a table-shaped opaque member is provided in front of the protective panel 41. The extension member 44 is installed such that the upper surface is horizontal to the horizontal plane in the real space, the plane containing the lower end of the display unit 11.

On the upper side of the display 1, the camera 45 is provided according to the shape of the cut-away part 41A. The camera 45 captures an image of a space in front of the display device 31.

The side wall members 42-1 and 42-2, the shielding member 43, and the extension member 44 function as the shield 21 described with reference to Fig. 2. That is, the side wall members 42-1 and 42-2, the shielding member 43, and the extension member 44 can activate the focusing function of the user's eyes or activate spatial perception through shielding, by the movement or natural swaying of the user observing the stereoscopic image displayed on the display unit 11.

Therefore, it is possible to alleviate that, in a case where the user is left for a long time in a state where the focal length is fixed or there is no shielding, the difference from the state that the user recognizes as correct from experience causes a sense of incongruity, resulting in the loss of the stereoscopic effect to be obtained by the user or the perception of the stereoscopic image as a planar image.

Note that the display device 31 may be provided with all of the side wall members 42-1 and 42-2, the shielding member 43, and the extension member 44, or only some of the side wall members 42-1 and 42-2, the shielding member 43, and the extension member 44 may be provided.

### 2. Example of Shielding Member

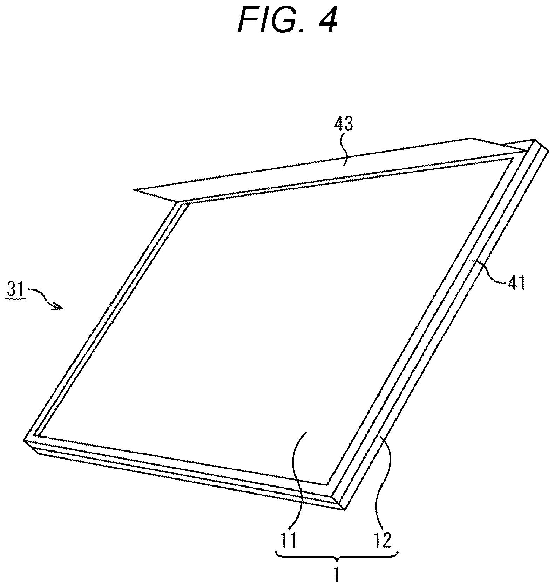

Fig. 4 is a perspective view illustrating a second configuration of the external appearance of the display device 31.

In Fig. 4, only the shielding member 43 among the above-described members functioning as the shield 21 is provided on the display device 31.

Note that in Fig. 4, the display unit 11 and the protective panel 41 are illustrated as members having the same shape.

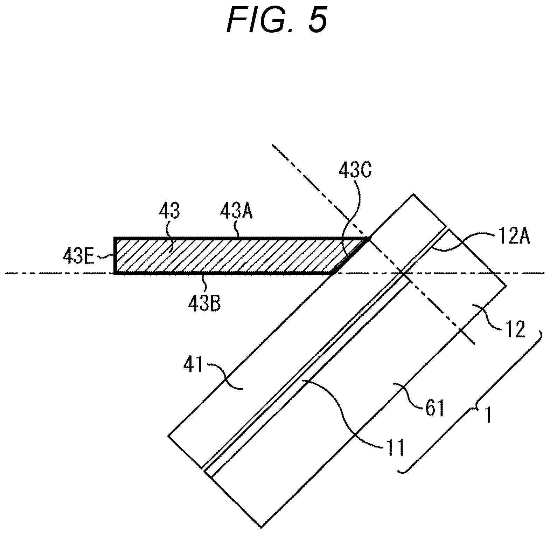

Fig. 5 is an enlarged cross-sectional view of a main part illustrating the vicinity of the shielding member 43 in Fig. 4.

As illustrated in Fig. 5, the shielding member 43 is horizontally attached so as to extend forward from the protective panel 41. An upper surface 43A and a lower surface 43B of the shielding member 43 are each the horizontal plane in the real space.

On the rear side of the display unit 11, a rear surface part 61 is provided as a part of the frame 12. A predetermined gap is formed between the display 1 and the protective panel 41.

As illustrated by hatching in Fig. 5, in the cross section of the shielding member 43, a contact surface 43C in contact with the protective panel 41 provided obliquely with respect to the horizontal plane in the real space is an oblique surface according to the angle of the protective panel 41.

The length of the upper surface 43A in the depth direction is shorter than the length from the upper end of the display unit 11 to the lower end and the length corresponding to the angle formed by the horizontal plane in the real space and the display unit 11. That is, the length of the upper surface 43A in the depth direction is shorter than the length in the depth direction of the horizontal plane of the rectangular parallelepiped having the upper end and the lower end of the display unit 11 as the diagonal sides. Note that the length of the shielding member 43 in the depth direction is regarded as the length of the upper surface 43A in the depth direction.

The lower surface 43B is the same height as the upper end of the display unit 11 as indicated by the two-dot chain line. That is, the lower surface 43B is along the horizontal plane in the real space, the plane containing the upper end of the display unit 11. The front surface 43E of the shielding member 43 is formed perpendicular to the horizontal plane in the real space.

Note that the angle of the shielding member 43 may be kept horizontal according to the angle of the protective panel 41 with respect to the horizontal plane in the real space. The shielding member 43 may be completely fixed to the housing of the display device 31, or may be configured so as to be integrated with the housing, or may be detachable from the housing of the display device 31.

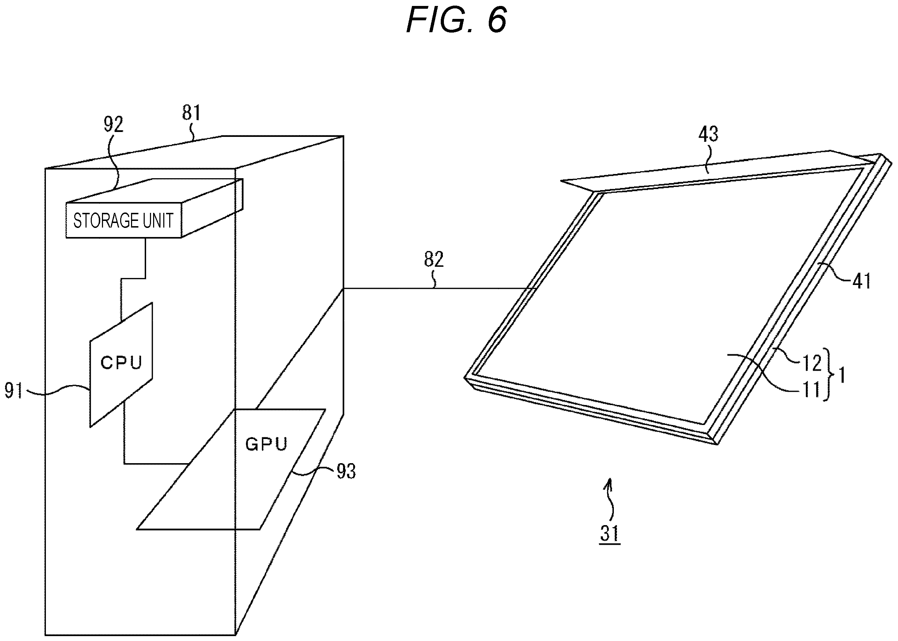

Fig. 6 illustrates a configuration example of an information processing system.

The information processing system illustrated in Fig. 6 is configured by a display control device 81 being provided as a device external to the display device 31. The display control device 81 may be provided outside the housing of the display device 31, or the display control device 81 may be provided inside the housing of the display device 31 and configured as an information processing device.

Examples of the display control device 81 include a personal computer (PC) and a dedicated device. The display control device 81 controls the display device 31 to display a stereoscopic image.

The display control device 81 has a central processing unit (CPU) 91, a storage unit 92, and a graphics processing unit (GPU) 93.

The CPU 91 executes a predetermined program and controls the entire display control device 81. For example, the CPU 91 acquires a 3D model used for generating the stereoscopic image from the storage unit 92, and supplies the 3D model to the GPU.

The storage unit 92 may include a hard disk drive (HDD), a solid state drive (SSD), a main memory, or the like. The storage unit 92 stores the 3D model of an object to be stereoscopically displayed.

The GPU 93 is connected to the display 1 of the display device 31 via a display interface 82. The GPU 93 performs image processing, such as rendering, on the basis of the 3D model in accordance with the control by the CPU 91 to generate a stereoscopic image. The GPU 93 outputs a stereoscopic image to the display 1.

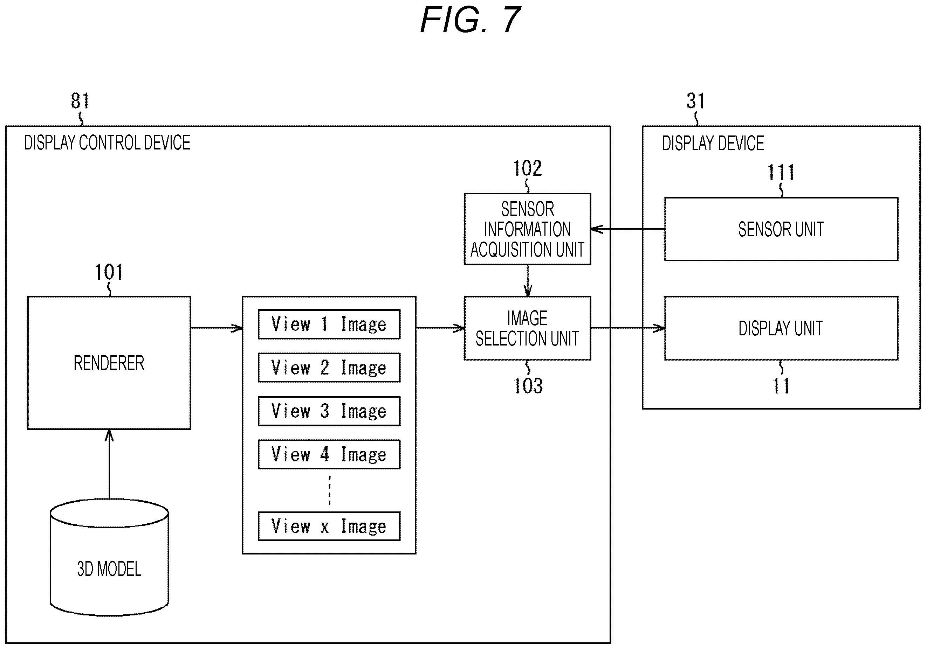

Fig. 7 is a block diagram illustrating a functional configuration example of the information processing system in Fig. 6. In the configurations illustrated in Fig. 7, the same configurations as those described above are denoted by the same reference signs. Overlapping description will be omitted as appropriate.

As illustrated in Fig. 7, in the display control device 81, a renderer 101, a sensor information acquisition unit 102, and an image selection unit 103 are implemented by the CPU 91 or the like.

The 3D model is input to the renderer 101. The renderer 101 generates stereoscopic images representing the states of the 3D model viewed from a plurality of viewpoints, and supplies the stereoscopic images to the image selection unit 103. For example, the renderer 101 generates stereoscopic images for all viewpoints (viewing angles) that can be displayed by the display unit 11 of the display device 31.

The sensor information acquisition unit 102 acquires sensor information representing the detection results of a sensor unit 111 of the display device 31. The sensor information acquisition unit 102 detects the position and posture of the user on the basis of the sensor information. The position and posture of the user may be, for example, a relative position and posture with respect to the display unit 11. Furthermore, the position and posture of the user may be the position (viewpoint) of the user's eyes, or may be the position of the user's left eye and the position of the user's right eye. Furthermore, the posture of the user may be the orientation of the user's face or the line-of-sight direction of the user's left eye and right eye.

For example, in a case where the sensor unit 111 is directed forward of the display device 31 and is the camera 45, the sensor information acquisition unit 102 detects the position and posture of the user on the basis of the captured image supplied from the sensor unit 111. Note that the information representing the position and posture of the user detected by the sensor unit 111 may be acquired by the sensor information acquisition unit 102. The sensor information acquisition unit 102 supplies the information representing the position and posture of the user to the image selection unit 103.

The image selection unit 103 selects a stereoscopic image to be displayed on the display unit 11 on the basis of the information supplied from the sensor information acquisition unit 102. Specifically, the image selection unit 103 selects a stereoscopic image in a state in which the 3D model is orthogonally projected according to the position and posture of the user, from among the plurality of stereoscopic images (View 1 Image to View x Image) supplied from the renderer 101.

The image selection unit 103 supplies the selected stereoscopic image to the display unit 11 of the display device 31 to display the stereoscopic image.

The display device 31 has the display unit 11 and the sensor unit 111.

The sensor unit 111 may include a camera, a depth camera, a human sensor, or the like. The sensor unit 111 detects a user observing a stereoscopic image. For example, in a case where the sensor unit 111 is the camera 45, the sensor unit 111 captures an image of a region in front of the display device 31 and generates the captured image.

By providing the shielding member 43 to the display device 31 having the above configuration, the focusing function of the user is activated, and the sense of incongruity caused when observing stereoscopic images is reduced. Although the example in which the shielding member 43 functions as a shield has been described, the protective panel 41 can be formed so as to function as a shield.

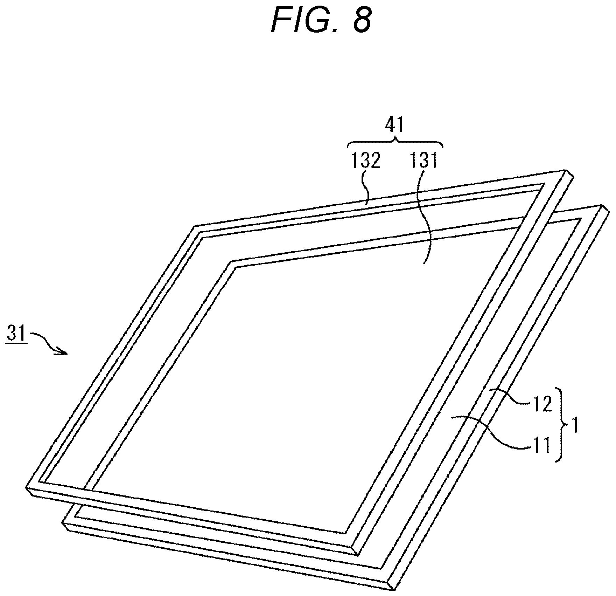

Fig. 8 is a perspective view illustrating a second configuration of the external appearance of the display device 31.

As illustrated in Fig. 8, the protective panel 41 is provided with a transparent horizontally long rectangular transmissive part 131 while leaving a narrow mask part 132 that is an opaque member. The mask part 132 is provided so as to surround the upper, lower, left, and right edges of the transmissive part 131.

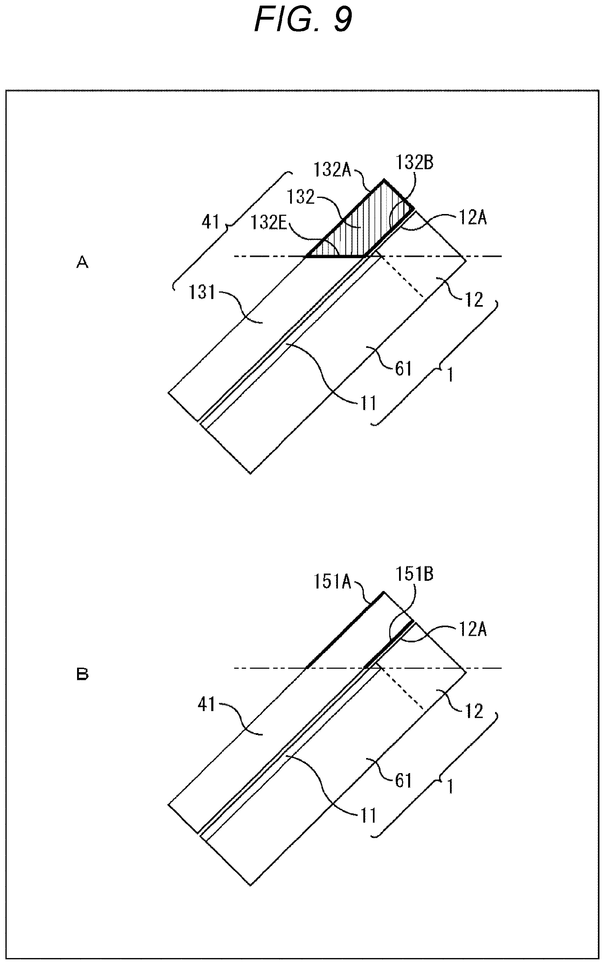

Fig. 9 is an enlarged cross-sectional view of a main part illustrating the vicinity of the upper side of the mask part 132 in Fig. 8.

As illustrated in Fig. 9, the mask part 132 is provided obliquely similarly to the protective panel 41 provided obliquely with respect to the horizontal plane in the real space. As illustrated by hatching in A of Fig. 9, in the cross section of the mask part 132, a contact surface 132E in contact with the transmissive part 131 is the horizontal plane in the real space. That is, as indicated by the two-dot chain line, the contact surface 132E is provided along the horizontal plane in the real space, the plane containing the upper end on the depth side of the display unit 11.

A front face 132A and a back face 132B of the mask part 132 are provided as part of the front and back faces, respectively, of the protective panel 41.

Note that the mask part 132 may be provided only at the upper edge of the protective panel 41, or may be provided symmetrically at all the upper, lower, left, and right edges of the protective panel 41. Furthermore, the mask part 132 may be provided so as to correspond to the inclination of the display 1. Specifically, the mask part 132 may be provided at the edge of the protective panel 41 which is farther from the user in front of the display device 31.

As described above, the mask part 132 is provided so as to protrude forward of the display device 31 than the display unit 11. Thus, the mask part 132 functions as the minute shield 21 that shields a part of the display unit 11. Therefore, the mask part 132 can activate the focusing function of the user's eyes or activate spatial perception through shielding, by the user's movement or natural swaying.

As illustrated in B of Fig. 9, the front and back faces of the protective panel 41 may be partially painted. Furthermore, part of either the front or back face of the protective panel 41 may be painted.

In B of Fig. 9, the respective upper ends of the front and back faces of the protective panel 41 are coated with opaque paint. A front face painted part 151A, which is the painted front face of the protective panel 41, has a shape similar to the front face 132A in A of Fig. 9. Furthermore, a back face painted part 151B, which is the painted back face of the protective panel 41, has a shape similar to the back face 132B in A of Fig. 9.

That is, as indicated by the two-dot chain line, the front face painted part 151A and the back face painted part 151B are provided so that the respective lower ends are in contact with the horizontal plane in the real space, the plane containing the upper end on the depth side of the display unit 11.

As described above, the front face painted part 151A is provided so as to protrude forward of the display device 31 than the display unit 11. Thus, the front face painted part 151A functions as the shield 21 that shields part of the display unit 11. Therefore, the front face painted part 151A can activate the focusing function of the user's eyes or activate spatial perception through shielding, by the user's movement or natural swaying.

### 3. Example of Extension Member

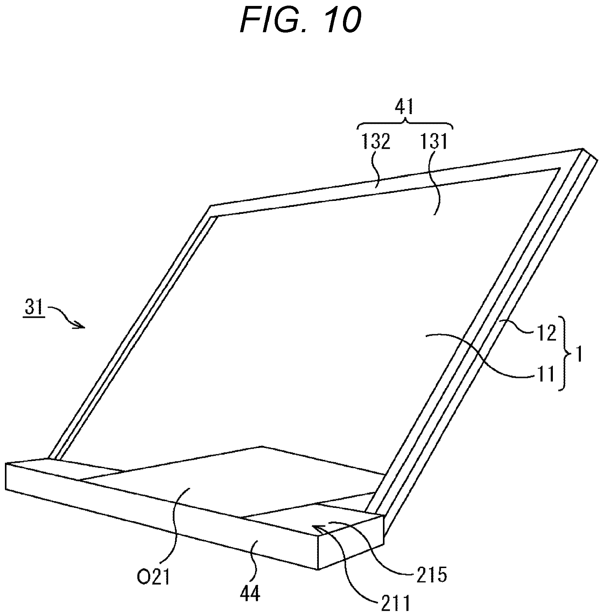

Fig. 10 is a perspective view illustrating a fourth configuration of the external appearance of the display device 31.

In Fig. 10, the extension member 44 and the mask part 132 among the above-described members functioning as the shield 21 are provided on the display device 31.

A sub-display 211 is provided on the upper surface of the extension member 44. The sub-display 211 has a sub-display unit 215 including an LCD, an organic EL display, or the like. A sub-display image which is an image continuous with the stereoscopic image displayed on the display unit 11 is displayed on the sub-display unit 215.

In Fig. 10, a substantially rectangular floor object O21 is displayed over the display unit 11 and the sub-display unit 215. The floor object O21 is virtually placed along the upper surface of the extension member 44 so as to extend in the depth direction from the front side of the extension member 44.

The floor object O21 is represented by displaying, on the display unit 11, a stereoscopic image that shows a part of the floor object O21, and displaying, on the sub-display unit 215, a sub-display image that shows the remaining part of the floor object O21.

By displaying a sub-display image such that the floor object O21 is on the display surface of the sub-display unit 215, the extension member 44 can activate the focusing function of the user's eyes more strongly than the above-described members functioning as the shield 21.

Note that the angle of the upper surface of the extension member 44 may be kept horizontal according to the angle of the protective panel 41 with respect to the horizontal plane in the real space. The extension member 44 may be completely fixed to the housing of the display device 31, or may be configured so as to be integrated with the housing, or may be detachable from the housing of the display device 31. That is, the extension member 44 is provided alone and can be detachably attached to the display device 31. When attaching the extension member 44 to the display device 31, the extension member 44 may be connected not only mechanically but also electrically.

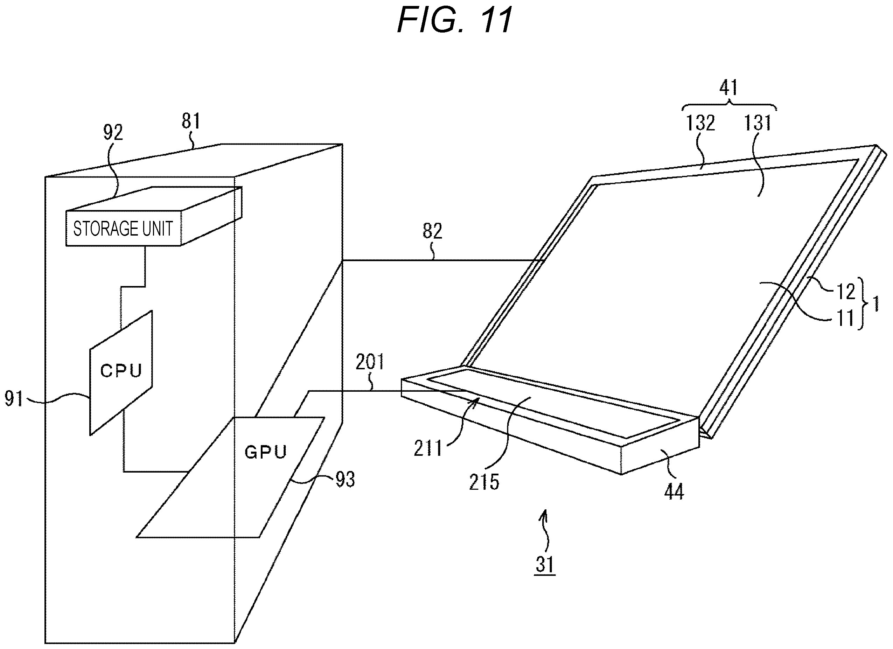

Fig. 11 illustrates another configuration example of the information processing system.

In Fig. 11, the same configurations as those of the information processing system in Fig. 6 are denoted by the same reference signs. Overlapping description will be omitted as appropriate.

The configuration of the information processing system illustrated in Fig. 11 is different from the configuration described with reference to Fig. 6 in that the extension member 44 is provided in the display device 31.

The extension member 44 is provided with the sub-display 211 having the sub-display unit 215. The sub-display unit 215 may include a 3D display capable of displaying a stereoscopic image or a 2D display capable of displaying only a 2D image.

The sub-display 211 is connected to the GPU 201 of the display control device 81 via a display interface 201. The sub-display 211 displays the sub-display image supplied from the GPU 201 on the sub-display unit 215.

The GPU 93 outputs the sub-display image to the sub-display 211.

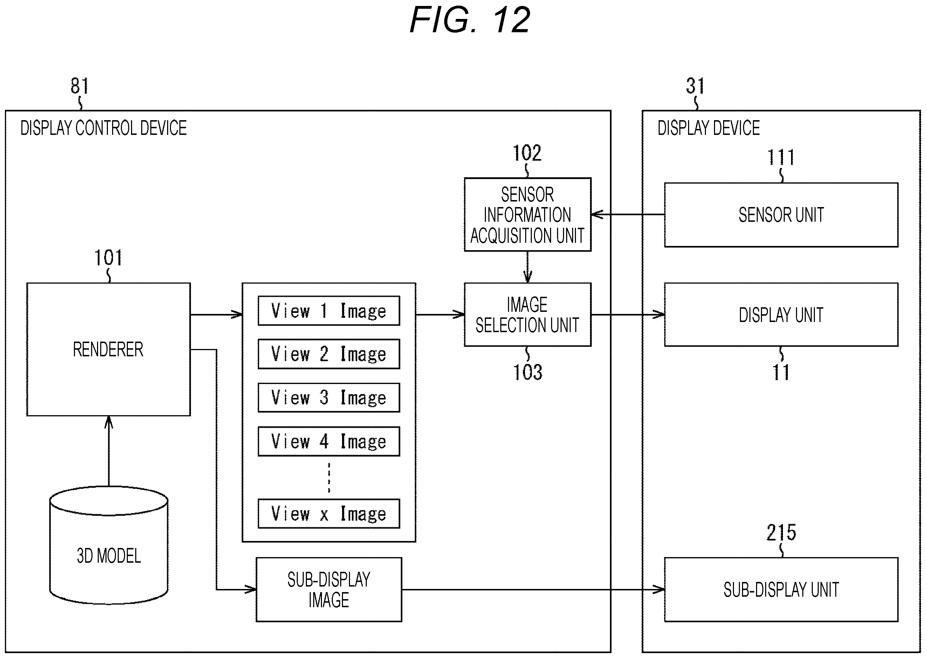

Fig. 12 is a block diagram illustrating a functional configuration example of the information processing system in Fig. 11. In the configurations illustrated in Fig. 12, the same configurations as those described above are denoted by the same reference signs. Overlapping description will be omitted as appropriate.

The configuration of the information processing system illustrated in Fig. 12 is different from the configuration described with reference to Fig. 7 in that the sub-display unit 215 is provided in the display device 31.

The renderer 101 generates a plurality of stereoscopic images and also generates a sub-display image on the basis of the 3D model. The renderer 101 supplies the sub-display image to the sub-display unit 215 for display.

Note that the renderer 101 may be supplied with the stereoscopic image selected by the image selection unit 103 from the image selection unit 103, or the information representing the position and posture of the user may be supplied from the sensor information acquisition unit 102.

In these cases, the renderer 101 can generate the sub-display image on the basis of the information supplied from the image selection unit 103 or the sensor information acquisition unit 102.

The sub-display unit 215 displays the sub-display image supplied from the renderer 101.

Note that the extension member 44 may be provided with an illumination device. Furthermore, the extension member 44 does not necessarily need to be provided with the sub-display 211.

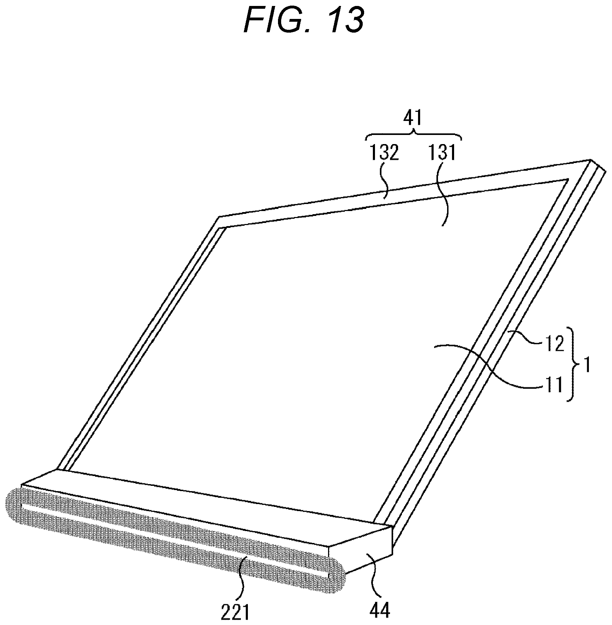

Fig. 13 is another perspective view illustrating the fourth configuration of the external appearance of the display device 31.

In Fig. 13, an illumination device 221 is provided so as to be housed in the edge of the lower front end of the extension member 44. Examples of the illumination device 221 include a light source such as a light emitting diode (LED). The illumination device 221 can irradiate the detection range of the sensor unit 111 with light. For example, the illumination device 221 can illuminate the image-capturing range of the camera 45 with light.

Therefore, it is possible to improve the accuracy of the user's face recognition or pupil recognition by the sensor unit 111 regardless of the use environment of the display device 31. Furthermore, since the illumination device 221 is provided so as to be housed in the extension member 44, it is possible to achieve improved recognition performance of the sensor unit 111 with space-saving, cost-saving, and simple installation.

Note that there is a possibility that the screen edge of the display device 31 may appear to glow due to the light from the illumination device 221. Therefore, in the display device 31, by providing the mask part 132 to the protective panel 41, it is possible to make it invisible to the user that the protective panel 41 and the display 1 glow due to the light of the illumination device 221. Furthermore, by providing the mask part 132 at a position where the light of the illumination device 221 enters the protective panel 41 or the display 1, it is possible to prevent the light of the illumination device 221 from entering the protective panel 41 or the display 1. Thus, by providing the mask part 132 of the protective panel 41, it is possible to prevent the screen edge or the entire screen of the display device 31 from glowing due to the light of the illumination device 221 or to prevent the user from recognizing the light of the screen edge. Therefore, it is possible to alleviate that the user is inhibited from observing the stereoscopic image by the light of the illumination device 221 and the stereoscopic effect to be obtained by the user is lost.

### 4. Modification

### • Example of Long Shielding Member

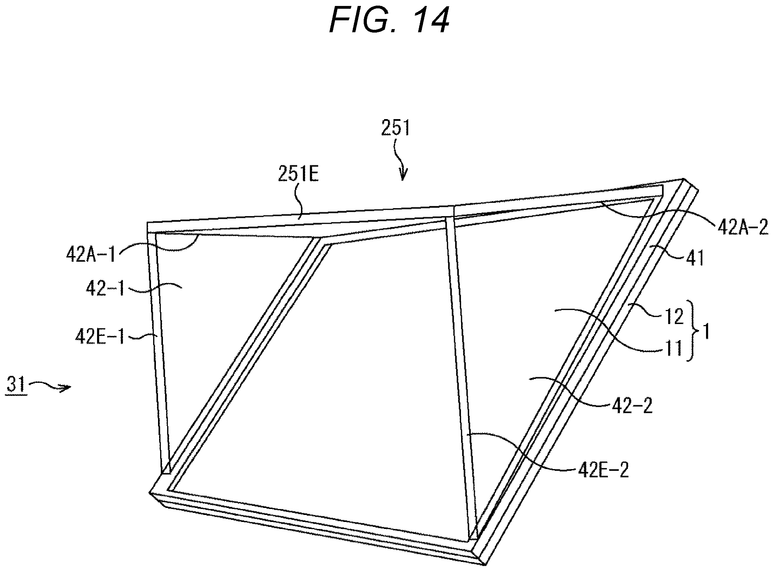

Fig. 14 is a perspective view illustrating a fifth configuration of the external appearance of the display device 31.

In Fig. 14, the side wall members 42-1 and 42-2 and a shielding member 251, among the members functioning as the shield 21, are provided on the display device 31.

The side wall members 42-1 and 42-2 are installed such that front surfaces 42E-1 and 42E-2 are perpendicular to the horizontal plane in the real space.

The shielding member 251 is an opaque member having a longer length in the depth direction than the shielding member 43 described with reference to Fig. 4. The shielding member 251 is installed in contact with the upper surfaces 42A-1 and 42A-2 of the side wall members 42-1 and 42-2. That is, the shielding member 251 is provided along the horizontal plane in the real space.

The length of the shielding member 251 in the depth direction is the same as the length from the upper end of the display unit 11 to the lower end and the length corresponding to the angle formed by the horizontal plane in the real space and the display unit 11. That is, the length of the shielding member 251 in the depth direction is the same as the length in the depth direction of the horizontal plane of the rectangular parallelepiped having the upper end and the lower end of the display unit 11 as the diagonal sides. Note that here, the length of the shielding member 251 in the depth direction is regarded as the length of the lower surface in the depth direction.

The shielding member 251 is installed such that a front surface 251E is perpendicular to the horizontal plane in the real space.

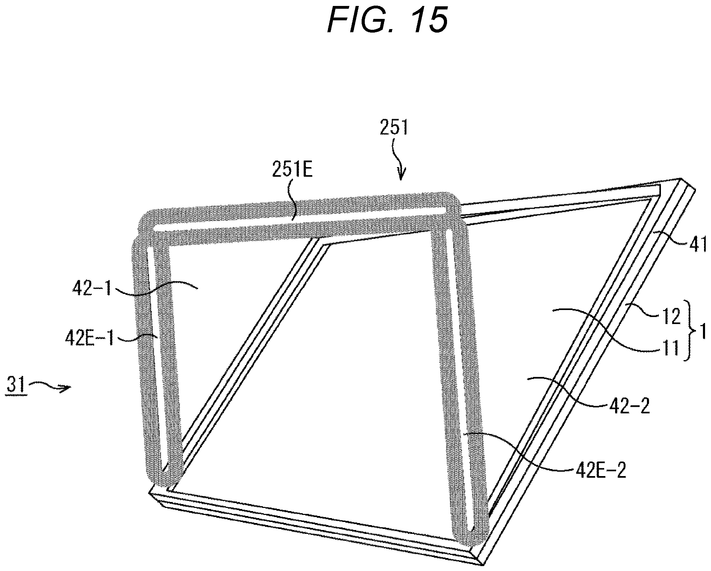

Fig. 15 is another perspective view illustrating a fourth configuration of the external appearance of the display device 31.

In Fig. 15, the front surfaces 42E-1 and 42E-2 of the side wall members 42-1 and 42-2 and the front surface 251E of the shielding member 251 are glowing. For example, a light emitter (flat light), such as an organic light emitting diode (OLED) or a crystal LED display (CLED), is provided on each of the front surfaces 42E-1 and 42E-2 and the front surface 251E. Light is emitted by the light emitters provided on the front surfaces 42E-1 and 42E-2 and the front surface 251E.

A fluorescent agent may be mixed into the side wall members 42-1 and 42-2. In this case, light is emitted by the fluorescent agent mixed in the side wall members 42-1 and 42-2. Furthermore, a light source may be provided in the housing of the display device 31, and light guide plates may be used as the side wall members 42-1 and 42-2. In this case, light from the light source provided in the display device 31 enters the interior of the side wall members 42-1 and 42-2 from one side of each, and is diffused from the front surfaces 42E-1 and 42E-2.

As described above, since the front surfaces 42E-1 and 42E-2 and the front surface 251E glow, the presence of the side wall members 42-1 and 42-2 and the shielding member 251 can be easily recognized even in a case where the user is away from the display unit 11. Therefore, the line-of-sight of the user can be guided to the side wall members 42-1 and 42-2 and the shielding member 251, and the focusing function of the user's eyes can be activated.

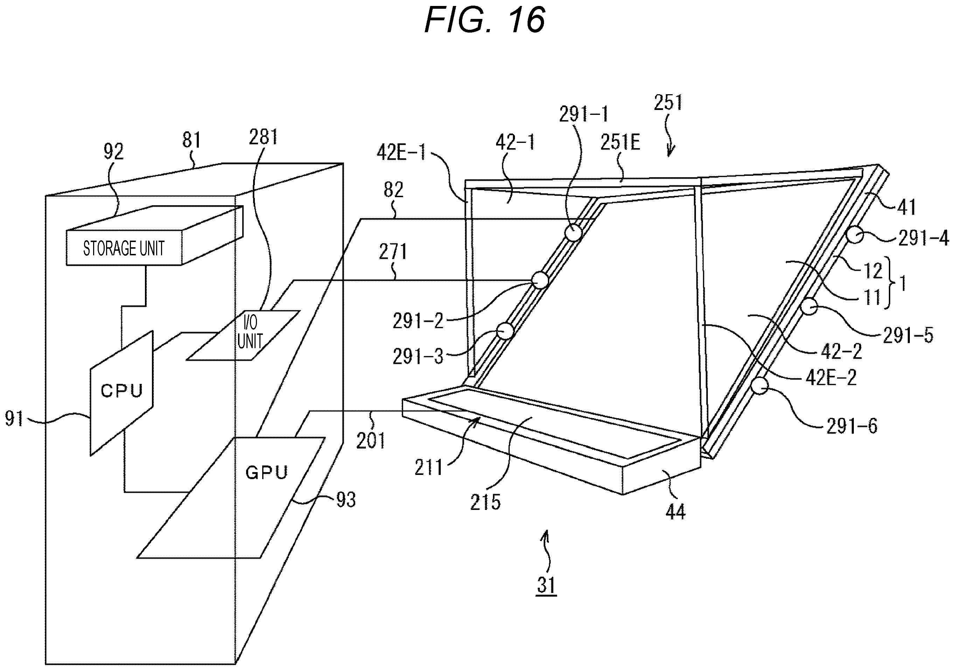

Fig. 16 illustrates still another configuration example of the information processing system.

In Fig. 16, the same configurations as those of the information processing system in Fig. 11 are denoted by the same reference signs. Overlapping description will be omitted as appropriate.

The configuration of the information processing system illustrated in Fig. 16 is different from the configuration described with reference to Fig. 11 in that the shielding member 251 and light sources 291-1 to 291-6 are provided on the display device 31 and an input-output (I/O) unit 281 is provided in the display control device 81.

The I/O unit 281 may include a universal serial bus (USB) interface, a universal asynchronous receiver-transmitter (UART), or the like. The I/O unit 281 is connected to the light sources 291-1 to 291-6 of the display device 31 by a wire 271. The I/O unit 281 supplies control signals to the light sources 291-1 to 291-6 to drive the light sources 291-1 to 291-6 and control the color of light to be output.

The light sources 291-1 to 291-6 are provided to the housing of the display device 31. The light sources 291-1 to 291-3 are provided on the side wall member 42-1 side of the display device 31, and emit light in accordance with the control by the I/O unit 281. The light output from the light sources 291-1 to 291-3 enters the interior of the side wall member 42-1 from the side and is diffused from the front surface 42E-1.

On the other hand, the light sources 291-4 to 291-6 are provided on the side wall member 42-2 side of the display device 31, and emit light in accordance with the control by the I/O unit 281. The light output from the light sources 291-4 to 291-6 enters the interior of the side wall member 42-2 from the side and is diffused from the front surface 42E-2.

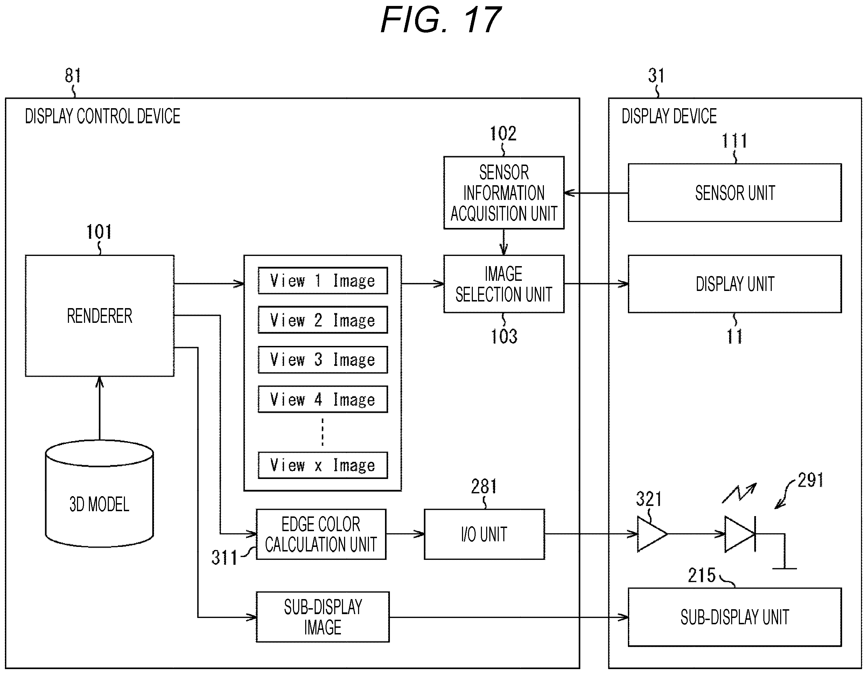

Fig. 17 is a block diagram illustrating a functional configuration example of the information processing system in Fig. 16. In the configurations illustrated in Fig. 17, the same configurations as those described above are denoted by the same reference signs. Overlapping description will be omitted as appropriate.

The configuration of the information processing system illustrated in Fig. 17 is different from the configuration described with reference to Fig. 12 in that the light source 291 and a driver 321 are provided in the display device 31, and the I/O unit 281 and an edge color calculation unit 311 are provided in the display control device 81. In the display control device 81, an edge color calculation unit 311 is implemented by the CPU 91 or the like.

A plurality of stereoscopic images is supplied from the renderer 101 to the edge color calculation unit 311. The edge color calculation unit 311 determines the color, brightness, and glow of light for the light source 291 on the basis of the stereoscopic images supplied from the renderer 101. For example, the edge color calculation unit 311 determines, the colors contained in the stereoscopic images or the colors related to the environment of the space represented in the stereoscopic images, as the colors of the light to be output by the light source 291.

The edge color calculation unit 311 supplies the light emission information to the I/O unit 281. The light emission information includes information indicating the color, brightness, and glow.

The I/O unit 281 generates control signals for causing the light source 291 to emit light in accordance with the light emission information supplied from the edge color calculation unit 311, and supplies the control signals to the driver 321 of the display device 31.

The driver 321 controls the light source 291 in accordance with the control signals supplied from the I/O unit 281.

The light source 291 may include an LED, an EL element, or the like. The light source 291 emits light in accordance with the control by the driver 321.

As described above, the information processing system can illuminate the front surfaces 42E-1 and 42E-2 with colors matching the stereoscopic images.

Therefore, the line-of-sight of the user can be more naturally guided to the side wall members 42-1 and 42-2 and the shielding member 251, and the focusing function of the user's eyes can be activated. Furthermore, the display device 31 can improve a sense of immersion in the content represented by the stereoscopic images.

Note that, the light emitted by the light source 291 allows not only the front surfaces 42E-1 and 42E-2 but also one surface or the whole of the side wall members 42-1 and 42-2 to glow in a way that matches a stereoscopic image. For example, a color corresponding to the image displayed on the display unit 11 may be represented on the inside of the side wall members 42-1 and 42-2, or an image corresponding to the image displayed on the display unit 11 may be displayed.

### • Example of Integral Flexible Display

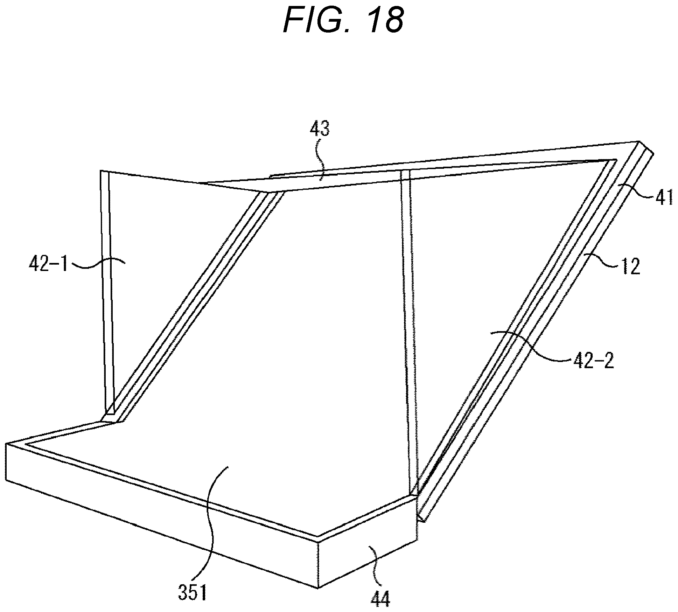

Fig. 18 is a perspective view illustrating a sixth configuration of the external appearance of the display device 31.

As illustrated in Fig. 18, instead of (the display unit 11 of) the display 1 and (the sub-display unit 215 of) the sub-display 211, an integrated flexible display 351 may be provided to the display device 31. The flexible display 351 may include a bendable display such as an organic EL display.

The flexible display 351 is provided along the protective panel 41, is bent in the vicinity of the contact point between the protective panel 41 and the extension member 44, and is provided along the upper surface of the extension member 44.

The flexible display 351 displays a stereoscopic image obtained by combining the stereoscopic image displayed on the display unit 11 and the sub-display image displayed on the sub-display unit 215.

### • Example of Linear Shielding Member

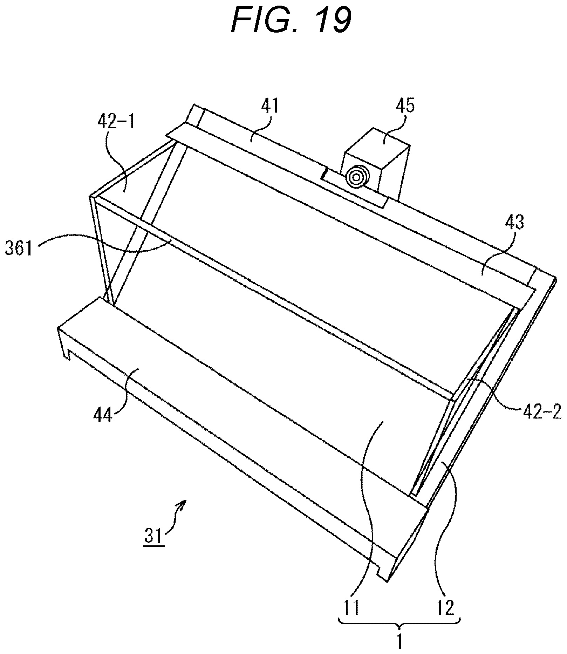

Fig. 19 is another perspective view illustrating the first configuration of the external appearance of the display device 31.

In Fig. 19, a linear shielding member 361 is provided between the vertexes of the side wall members 42-1 and 42-2 of the display device 31 described with reference to Fig. 3. The shielding member 361 is provided along the horizontal plane in the real space. The shape of the shielding member 361 may be an elongated plate shape. The shielding member 361 can have a predetermined color, for example, white.

The color of the shielding member 361 may be changed in accordance with the stereoscopic image displayed on the display unit 11. The shielding member 361 can also be formed so as to emit light.

The shielding member 361 serves as a reference for attracting the user's line-of-sight, and can activate the focusing function of the user's eyes.

### • Example of Water Tank-Shaped Member

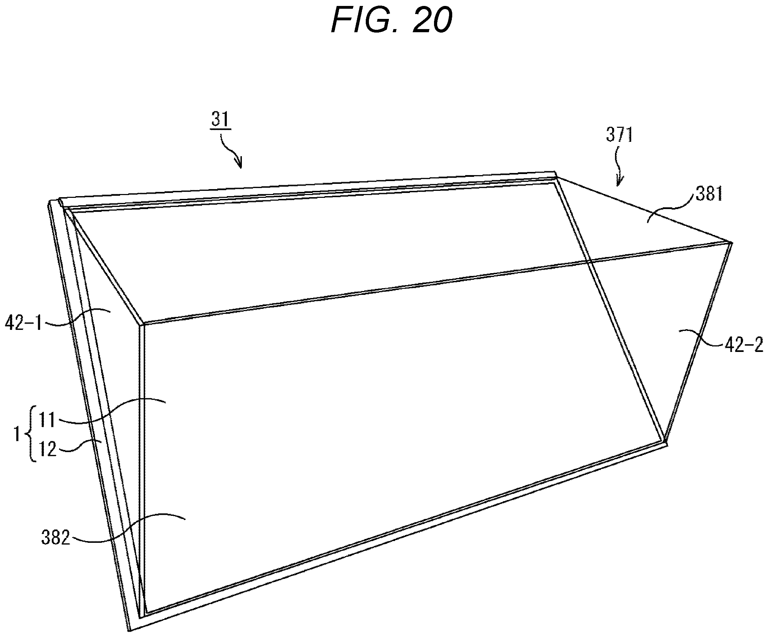

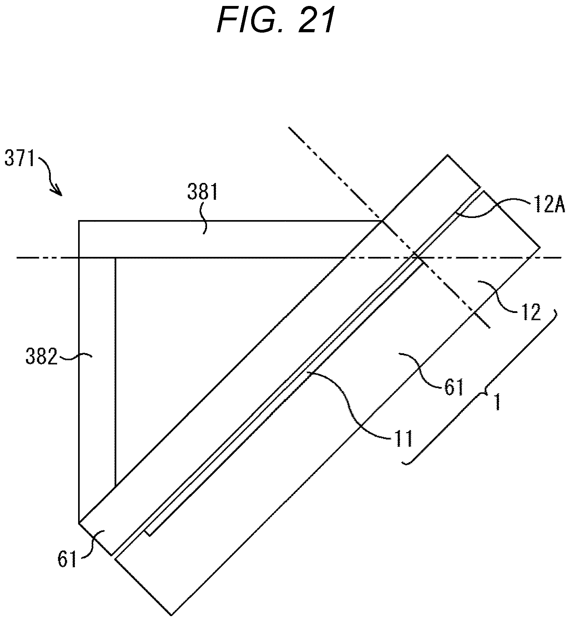

Figs. 20 and 21 are perspective views illustrating a seventh configuration of the external appearance of the display device 31.

As illustrated in Figs. 20 and 21, a water tank-shaped member 371, which is a water tank-shaped shield, is provided on the front side of the protective panel 41. The water tank-shaped member 371 includes the side wall members 42-1 and 42-2, a shielding member 381, and a front surface member 382.

The shielding member 381 has a shape similar to the shielding member 251 described with reference to Fig. 14 and is provided in a similar position. The shielding member 381 is different from the shielding member 251 in being transparent. The front surface member 382 is in contact with the shielding member 381 and the side wall members 42-1 and 42-2, and is provided along a vertical plane in the real space.

As illustrated in Fig. 21, the shielding member 381 and the front surface member 382 are provided in a hooked cross section.

The reflection of the outside view on the surface of the water tank-shaped member 371 serves as a reference for attracting the user's line-of-sight, and the focusing function of the user's eyes can be activated. Although the surface of the water tank-shaped member 371 is visible even in a case where the stereoscopic image is observed from any angle, since the surface of the water tank-shaped member 371 is recognized by the user as a part of what the user usually sees, such as a water tank or a showcase, it is possible to reduce the sense of incongruity that the display device 31 is provided with the water tank-shaped member 371.

Note that as part of the water tank-shaped member 371, the linear shielding member 361 (Fig. 19) may be formed between the vertices of the side wall members 42-1 and 42-2.

### • Shape of Shielding Member 251

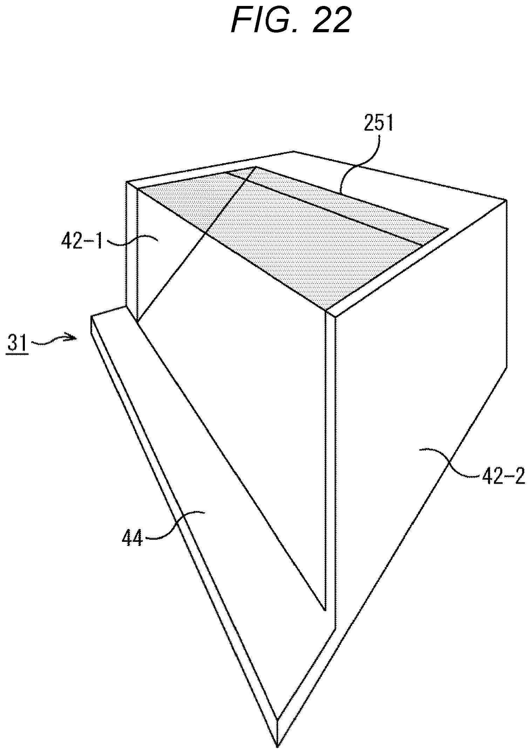

Fig. 22 illustrates an example of the shielding member 251.

As illustrated with color in Fig. 22, as the area of the representation space of the display device 31 covered by the shielding member 251 increases, the shielding member 251 more strongly attracts the user's line-of-sight, and the focusing function of the user's eyes can be more activated. However, as the size of the shielding member 251 increases, it is assumed that the region where a stereoscopic image can be observed without being shielded by the shielding member 251 is limited.

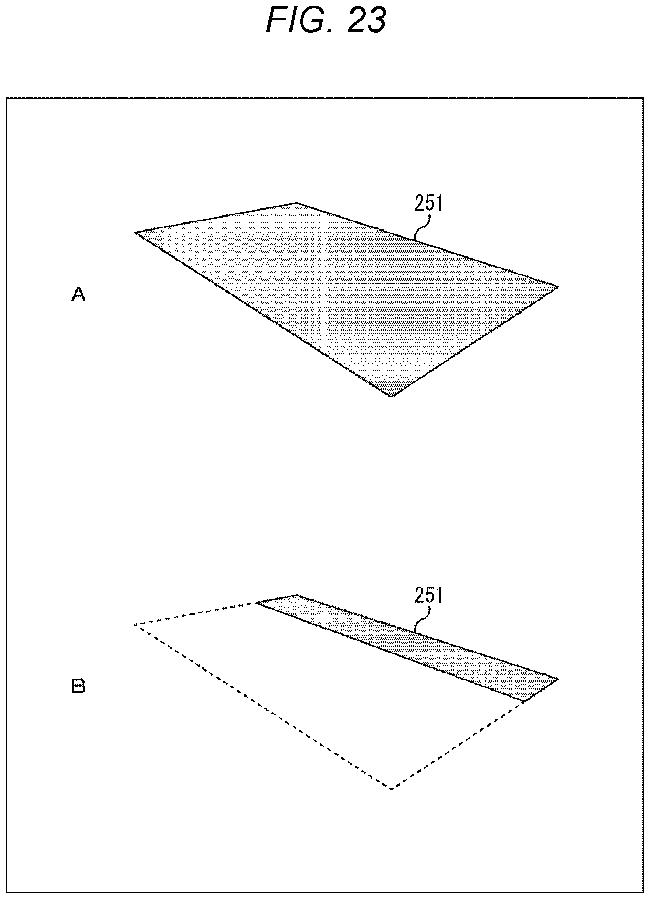

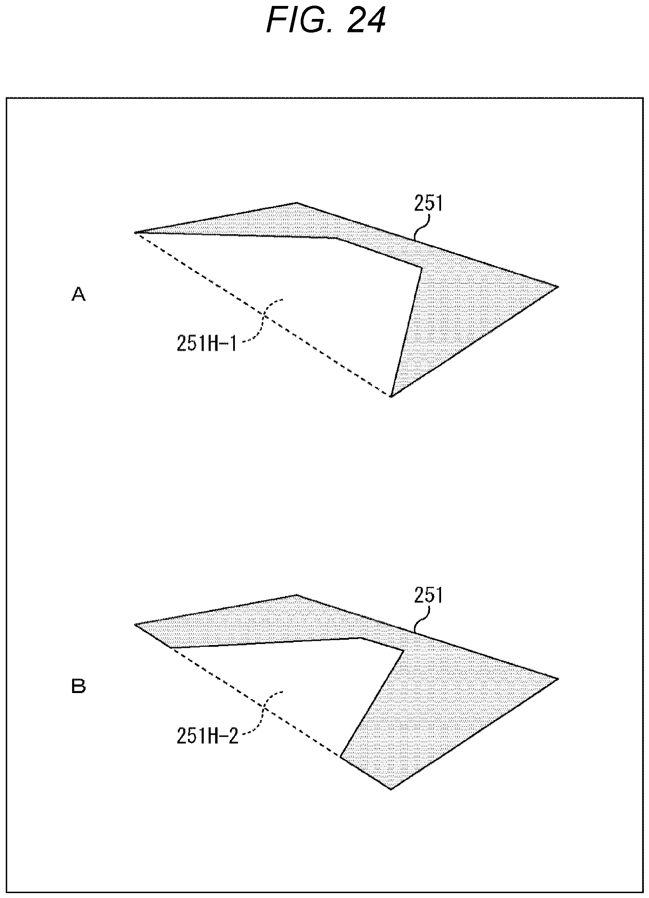

Therefore, by forming the shape of the shielding member 251 as illustrated in Figs. 23 and 24, it is possible to reduce the observation region where the stereoscopic image is shielded by the shielding member 251.

Figs. 23 and 24 illustrate examples of the shape of the shielding member 251.

A of Fig. 23 illustrates the shielding member 251 that widely covers the representation space of the display device 31 described with reference to Fig. 22. As described with reference to Fig. 14, the length of the shielding member 251 in the depth direction in A of Fig. 23 is the same as the length in the depth direction of the horizontal plane of the rectangular parallelepiped having the upper end and the lower end of the display unit 11 as the diagonal sides.

B of Fig. 23 illustrates the shielding member 251 in which the length of the display device 31 in the depth direction is shorter than that of the shielding member 251 in A of Fig. 23. The shielding member 251 in B of Fig. 23 corresponds to the shielding member 43 described with reference to Fig. 5 and the like. As described with reference to Fig. 5, the length of the shielding member 251 in the depth direction in B of Fig. 23 is shorter than the length in the depth direction of the horizontal plane of the rectangular parallelepiped having the upper end and the lower end of the display unit 11 as the diagonal sides.

A of Fig. 24 illustrates the shielding member 251 in which a trapezoidal opening 251H-1 is formed. The shielding member 251 in A of Fig. 24 has a shape obtained by cutting out a rectangular plate along the opening 251H-1, as illustrated with color. The opening 251H-1 is formed in the front of the shielding member 251.

B of Fig. 24 illustrates the shielding member 251 in which a trapezoidal opening 251H-2 is formed. The area of the opening 251H-2 is smaller than the area of the opening 251H-1 (A of Fig. 24). The shielding member 251 in B of Fig. 24 has a shape obtained by cutting out a rectangular plate along the opening 251H-2, as illustrated with color. The opening 251H-2 is formed in the front of the shielding member 251.

As described above, by forming the shape of the shielding member 251 into a shape with a cut away in the center that is an important region when observing stereoscopic images, it is possible to reduce the observation region in which the stereoscopic images are shielded by the shielding member 251 without impairing the effect of attracting the user's line-of-sight. Note that, although Fig. 24 illustrates a case where the opening 251H is formed in a substantially trapezoidal shape, any other shape may be used as long as the shape can reduce the observation region where the stereoscopic image is shielded by the shielding member 251.

### • Others

The above-described members functioning as the shield 21, such as the side wall members 42-1 and 42-2, the shielding member 43, or the extension member 44, can activate the focusing function of the user's eyes even if the members are provided at any of the upper, lower, left, and right positions of the display unit 11 serving as the screen of the display device 31. For example, the shielding member 43 may be provided in the vicinity of the lower end or the vicinity of the left and right ends of the display unit 11. When the display device 31 is rotated and used, the focusing function of the user's eyes can also be activated by members formed along the four sides of the display unit 11. Furthermore, the inclination of the display 1 may be changeable, and may be changed to any or a predetermined inclination. At this time, the positions, inclinations, and configurations of members functioning as the shield 21, such as the side wall members 42-1 and 42-2, the shielding member 43, and the extension member 44, may be changeable, or may be automatically changed according to the state of the display device 31 such as the inclination of the display 1.

The above-described display device 31 can be configured as, for example, a display device, a dedicated device, or an electronic device such as a personal computer (PC), a television receiver, or a tablet computer. Thus, it can also be said that the display device 31 is an information processing device such as a PC.

Furthermore, the above-described members such as the side wall members 42-1 and 42-2, the shielding member 43, and the extension member 44 can be formed using materials and the colors of appearance suitable for each. Furthermore, in the case of completely fixing the members such as the side wall members 42 -1 and 42 -2, the shielding member 43, and the extension member 44 to the display device 31, for example, a fixing method, such as an adhesive or screwing, can be used. Moreover, similarly to the shielding member 43 and the extension member 44, the side wall members 42-1 and 42-2 may be completely fixed to the housing of the display device 31, may be configured so as to be integrated with the housing, or may be detachable from the housing of the display device 31.

Note that, in the present specification, ends such as an upper end, a lower end, a left end, and a right end are also referred to as edges, and the edges are not limited to the ends in the strict sense and may include a region in the vicinity of the ends. For example, the edge is not limited to the upper end of the display surface and may include a region in the vicinity of the upper end.

The above-described series of processing can be executed by hardware or by software. In a case where the series of processing is executed by software, a program constituting the software is installed in a computer incorporated in dedicated hardware, a general-purpose personal computer, or the like.

The program to be installed is provided by being recorded in a removable medium 1011 including an optical disk (a compact disc-read only memory (CD-ROM), a digital versatile disc (DVD), or the like), a semiconductor memory, or the like. Furthermore, the program may be provided via a wired or wireless transmission medium such as a local area network, the Internet, or digital broadcasting. The program can be installed in advance in a read only memory (ROM) or the storage unit 92 illustrated in Fig. 6.

Note that the program executed by the computer may be a program in which processing is performed in time series in the order described in the present specification, or may be a program in which processing is performed in parallel or at necessary timing such as when a call is made.

Note that, in the present specification, a system means a set of a plurality of components (devices, modules (parts), and the like), and it does not matter whether or not all components are in the same housing. Consequently, a plurality of devices housed in separate housings and connected via a network, and one device with a plurality of modules housed in one housing are both systems.

Note that the effects described in the present specification are merely examples and are not limited, and other effects may be provided.

The embodiments of the present technology are not limited to the above-described embodiments, and various modifications can be made without departing from the gist of the present technology.

### <Combination Example of Configuration>

The present technology can also have the following configurations.
(1) An information processing device including:
   a first display unit that displays a stereoscopic image; and
   a member that is along at least one of a horizontal or vertical plane in real space, the plane containing an edge of a display surface of the first display unit.
(2) The information processing device according to (1), in which
   the member includes a first shielding member that is along a first horizontal plane in the real space, the first horizontal plane containing an upper end of the display surface.
(3) The information processing device according to (2), in which
   the first shielding member has a length that is shorter than a length from the upper end of the display surface to a lower end and shorter than a length corresponding to an angle formed by the first horizontal plane and the display surface.
(4) The information processing device according to (2), in which
   the first shielding member is configured as a cover member that has a region masked along the first horizontal plane, and that is provided along the display surface.
(5) The information processing device according to (2), in which
   the first shielding member is configured as a cover member that has a front and a back painted so that lower ends are in contact with the first horizontal plane, and that is provided along the display surface.
(6) The information processing device according to (2), in which
   the first shielding member has a length that is from the upper end of the display surface to a lower end and that corresponds to an angle formed by the first horizontal plane and the display surface.
(7) The information processing device according to (2) or (6), in which
   the first shielding member has a shape cut out to a predetermined shape.
(8) The information processing device according to any one of (1) to (7), in which
   the member includes an extension member that is along a second horizontal plane in the real space, the second horizontal plane containing a lower end of the display surface.
(9) The information processing device according to (8), in which
   the extension member has a second display unit that displays an image that is continuous with the stereoscopic image displayed on the display surface.
(10) The information processing device according to (8) or (9), in which
   the extension member has a light emitter.
(11) The information processing device according to (10), further including
   a sensor unit that acquires information associated with a user observing the stereoscopic image, in which
   the light emitter emits light so as to assist the sensor unit in acquiring information, and
   the first display unit displays a stereoscopic image determined on the basis of information acquisition results of the sensor unit.
(12) The information processing device according to (11), further including
   a first shielding member that is provided so as to prevent the light emitted from the light emitter from being emitted from the information processing device.
(13) The information processing device according to any one of (1) to (12), in which
   the member includes two side wall members that are along the vertical plane in the real space, the vertical plane containing left and right ends of the display surface.
(14) The information processing device according to (13), in which
   the side wall members each have a light emitter.
(15) The information processing device according to (13), in which
   the side wall members each include a light guide plate that diffuses light output from a light emitter that is provided to a housing that houses the first display unit.
(16) The information processing device according to (14) or (15), further including
   a control unit that controls a color of the light output from the light emitter on the basis of the stereoscopic image.
(17) The information processing device according to (2), in which
   the member further includes two side wall members that are along the vertical plane in the real space, the vertical plane containing left and right ends of the display surface, and a front surface member that is in contact with the first shielding member and the side wall members and along the vertical plane in the real space.
(18) The information processing device according to any one of (2) to (17), further including
   a linear second shielding member that is provided along the first horizontal plane.
(19) An information processing system including an information processing device, a shielding member, an extension member, and a side wall member, in which
   the information processing device includes a display unit that displays a stereoscopic image,
   the shielding member is installed along a first horizontal plane in real space, the first horizontal plane containing an upper end of a display surface of the display unit,
   the extension member is installed along a second horizontal plane in the real space, the second horizontal plane containing a lower end of the display surface of the display unit, and
   the side wall member is installed along a vertical plane in the real space, the vertical plane containing a left or right end of the display surface of the display unit.
(20) A member installed along at least one of a horizontal or a vertical plane in real space, the plane containing an edge of a display surface of a display unit that displays a stereoscopic image.

### REFERENCE SIGNS LIST

- 1: Display
- 11: Display unit
- 12: Frame
- 21: Shield
- 31: Display device
- 41: Protective panel
- 42-1, 42-2: Side wall member
- 43: Shielding member
- 44: Extension member
- 45: Camera
- 81: Display control device
- 101: Renderer
- 102: Sensor information acquisition unit
- 103: Image selection unit
- 111: Sensor unit
- 131: Transmissive part
- 132: Mask part
- 151A: Front face painted part
- 151B: Back face painted part
- 211: Sub-display
- 215: Sub-display unit
- 221: Illumination device
- 251: Shielding member
- 281: I/O unit
- 291-1 to 291-6: Light source
- 321: Driver
- 351: Flexible display
- 361: Shielding member
- 371: Water tank-shaped member
- 381: Shielding member
- 382: Front surface member
- 251H-1, 251H-2: Opening

## Claims

1. An information processing device comprising:
a first display unit that displays a stereoscopic image; and
a member that is along at least one of a horizontal or vertical plane in real space, the plane containing an edge of a display surface of the first display unit.

2. The information processing device according to claim 1, wherein
the member includes a first shielding member that is along a first horizontal plane in the real space, the first horizontal plane containing an upper end of the display surface.

3. The information processing device according to claim 2, wherein
the first shielding member has a length that is shorter than a length from the upper end of the display surface to a lower end and shorter than a length corresponding to an angle formed by the first horizontal plane and the display surface.

4. The information processing device according to claim 2, wherein
the first shielding member is configured as a cover member that has a region masked along the first horizontal plane, and that is provided along the display surface.

5. The information processing device according to claim 2, wherein
the first shielding member is configured as a cover member that has a front and a back painted so that lower ends are in contact with the first horizontal plane, and that is provided along the display surface.

6. The information processing device according to claim 2, wherein
the first shielding member has a length that is from the upper end of the display surface to a lower end and that corresponds to an angle formed by the first horizontal plane and the display surface.

7. The information processing device according to claim 2, wherein
the first shielding member has a shape cut out to a predetermined shape.

8. The information processing device according to claim 1, wherein
the member includes an extension member that is along a second horizontal plane in the real space, the second horizontal plane containing a lower end of the display surface.

9. The information processing device according to claim 8, wherein
the extension member has a second display unit that displays an image that is continuous with the stereoscopic image displayed on the display surface.

10. The information processing device according to claim 8, wherein
the extension member has a light emitter.

11. The information processing device according to claim 10, further comprising
a sensor unit that acquires information associated with a user observing the stereoscopic image, wherein
the light emitter emits light so as to assist the sensor unit in acquiring information, and
the first display unit displays a stereoscopic image determined on a basis of information acquisition results of the sensor unit.

12. The information processing device according to claim 11, further comprising
a first shielding member that is provided so as to prevent the light emitted from the light emitter from being emitted from the information processing device.

13. The information processing device according to claim 1, wherein
the member includes two side wall members that are along the vertical plane in the real space, the vertical plane containing left and right ends of the display surface.

14. The information processing device according to claim 13, wherein
the side wall members each have a light emitter.

15. The information processing device according to claim 13, wherein
the side wall members each include a light guide plate that diffuses light output from a light emitter that is provided to a housing that houses the first display unit.

16. The information processing device according to claim 15, further comprising
a control unit that controls a color of the light output from the light emitter on a basis of the stereoscopic image.

17. The information processing device according to claim 2, wherein
the member further includes two side wall members that are along the vertical plane in the real space, the vertical plane containing left and right ends of the display surface, and a front surface member that is in contact with the first shielding member and the side wall members and along the vertical plane in the real space.

18. The information processing device according to claim 2, further comprising
a linear second shielding member that is provided along the first horizontal plane.

19. An information processing system comprising an information processing device, a shielding member, an extension member, and a side wall member, wherein
the information processing device includes
a display unit that displays a stereoscopic image,
the shielding member is installed along a first horizontal plane in real space, the first horizontal plane containing an upper end of a display surface of the display unit,
the extension member is installed along a second horizontal plane in the real space, the second horizontal plane containing a lower end of the display surface of the display unit, and
the side wall member is installed along a vertical plane in the real space, the vertical plane containing a left or right end of the display surface of the display unit.

20. A member installed along at least one of a horizontal or vertical plane in real space, the plane containing an edge of a display surface of a display unit that displays a stereoscopic image.
